# EUROPEAN PATENT APPLICATION

(11) **EP 4 417 462 A1**
(43) Date of publication of application: **21.08.2024**
(21) Application number: 23218691.6
(22) Date of filing: 20.12.2023
(51) Int. Cl.: B60L 53/80, B60K 1/04, B60S 5/06, B65G 49/05, B66F 11/04, H01M 10/625

(54) **BATTERY SWAP PLATFORM AND BATTERY CHARGING AND SWAPPING STATION**

(30) Priority: 20.02.2023 CN 202310158566
(71) Applicant: Nio Technology (Anhui) Co., Ltd, Hefei City, Anhui 230601 (CN)
(72) Inventor: ZHOU, Xiaohong, Hefei City, Anhui 230601 (CN); YANG, Chao, Hefei City, Anhui 230601 (CN)
(74) Representative: Vossius & Partner Patentanwälte Rechtsanwälte mbB

(57) **Abstract**

The disclosure relates to the technical field of battery charging and swapping, and in particular to a battery swap platform (10) and a battery charging and swapping station. The disclosure aims to solve the problems existing in the lift-type battery charging and swapping station, such as large upper space occupation, limited field of view, and too large platform height. To this end, the battery swap platform (10) of the disclosure comprises: a platform body (11), a first mounting groove (111) and a second mounting groove (112) being formed on and extending in a width direction thereof; a front-wheel positioning device (12) arranged at the first mounting groove (111); a rear-wheel positioning device (13) arranged at the second mounting groove (112); two first jacking devices (14) arranged on two sides of the front-wheel positioning device (12) in the width direction, each device (14) being provided with a retractable first jacking component connected to one end of the front-wheel positioning device (12); and two second jacking devices (15) arranged on two sides of the rear-wheel positioning device (13) in the width direction, each device (15) being provided with a retractable second jacking component connected to one end of the rear-wheel positioning device (13). The disclosure can reduce the space occupied by the jacking devices (14,15), reduce the height of the battery swap platform (10), and improve the user's battery swap experience.

## Description

The present application claims priority of CN patent application 202310158566.6 filed on February 20, 2023 with the title "Battery swap platform and battery charging and swapping station".

### Technical Field

The disclosure relates to the technical field of battery charging and swapping, and in particular to a battery swap platform and a battery charging and swapping station.

### Background Art

In recent years, as the number of new energy vehicles has increased year by year, how to quickly and effectively replenish energy for new energy vehicles in a drained state has become a matter of great concern to many users and manufacturers. Currently, there are two main technical solutions for new energy replenishment: battery charging and swapping. Compared with the battery charging solution, the battery swapping solution has become an important development direction for energy replenishment due to its advantages such as shorter time and less damage to the battery.

Battery swapping is usually carried out in a battery swap station. There are mainly lift-type, stage-type (the battery swap platform is raised as a whole to accommodate a battery swap robot), and dug-in type (a pit is dug below the battery swap platform to accommodate a battery swap robot) battery swap stations on the market. Compared with the other two types of battery swap stations, the lift-type battery swap station has relatively low requirements for site selection, infrastructure, transportation, etc., which is conducive to product promotion. However, it also has certain shortcomings. In some lift-type battery swap solutions, due to the existence of lifting columns, a relatively large space is occupied on the upper side of the battery swap platform, resulting in limited field of view of a user. Moreover, the height of the vehicle raised by the lifting columns is relatively large, making it inconvenient for the user to get off the vehicle and resulting in a poor battery swap experience. In some other lift-type battery swap solutions, lifting devices are arranged under wheel positioning devices to lift the vehicle by lifting wheels. However, in this way, the lifting devices excessively occupy the space under the battery swap platform, resulting in increased overall height of the battery swap platform, so that the driving of the vehicle into the battery swap platform is not facilitated, and the battery swap experience is poor.

Accordingly, there is a need for a new technical solution in the field to solve the problem described above.

### Summary

In order to solve at least one of the aforementioned problems in the prior art, that is, in order to solve the problems of a large space occupied on the upper side of the platform, limited field of view, and inconvenience in getting off the vehicle due to the use of lifting columns in the lift-type battery charging and swapping station, and the problem of not facilitating vehicle entry caused by excessive increase in the height of the platform due to the provision of the lifting devices under the wheel positioning devices, in a first aspect of the disclosure, provided is a battery swap platform, comprising:
a platform body, a first mounting groove and a second mounting groove being formed on the platform body and extending in a width direction thereof;
a front-wheel positioning device arranged at the first mounting groove;
a rear-wheel positioning device arranged at the second mounting groove;
two first jacking devices arranged on two sides of the front-wheel positioning device in the width direction, the first jacking devices having retractable first jacking components, and each first jacking component is connected to one end of the front-wheel positioning device; and
two second jacking devices arranged on two sides of the rear-wheel positioning device in the width direction, the second jacking devices having retractable second jacking components, and each second jacking component being connected to one end of the rear-wheel positioning device.

In the technical solution of the disclosure, by providing the first jacking devices and the second jacking devices, it is possible to significantly reduce the height of the battery swap platform while reducing the space occupied by the jacking devices on the platform, and to significantly improve the user's battery swap experience. Specifically, the first jacking devices have retractable first jacking components, and the second jacking devices have retractable second jacking components, so that the first jacking components and the second jacking components can provide sufficient jacking height when extended, so as to facilitate battery swapping for a vehicle with a battery to be swapped. Moreover, the first jacking components and the second jacking components can maintain a low enough height when retracted, avoiding the occupation of too much space on the upper side of the battery swap platform which otherwise results in limited field of view of the user. Furthermore, since the objects jacked by the first jacking devices and the second jacking devices are the front-wheel positioning device and the rear-wheel positioning device, the raised height of the vehicle can be reduced, the battery swap operation can be completed only by lifting the vehicle to a very low height, and the restrictions on the design of a vehicle body can also be reduced. In addition, since the first jacking devices and the second jacking devices are arranged on two sides of the front-wheel positioning device and the rear-wheel positioning device in the width direction of the platform, there is no need to occupy the space under the front-wheel positioning device and the rear-wheel positioning device, so that the height of the platform body can be also greatly reduced, facilitating the more convenient and smoother entry of the vehicle into the battery swap platform, and improving the user's battery swap experience.

In a preferred technical solution of the battery swap platform described above, the front-wheel positioning device comprises a first mounting frame and a front-wheel roller group, the first mounting frame is embedded in the first mounting groove, the front-wheel roller group is mounted in the first mounting frame, and each first jacking component is connected to one end of the first mounting frame.

By providing the first mounting frame, the mounting accuracy of the front-wheel roller group can be improved, the mounting error can be reduced, and the stability of the raising process can also be improved.

In a preferred technical solution of the battery swap platform described above, the battery swap platform further comprises first connecting portions, via which the first jacking components are connected to the first mounting frame.

By providing the first connecting portions, the difficulty of designing and manufacturing the front-wheel positioning device can be reduced, the connection accuracy can be ensured, and the manufacturing cost can be saved.

In a preferred technical solution of the battery swap platform described above, the first connecting portions each comprise a first mounting seat and a first connecting frame, the first mounting seat is fixedly connected to an end portion of the first mounting frame, the first connecting member is located on an upper side of the first mounting seat and is hingedly connected to the first mounting seat, an outwardly extending first mounting stiffener is formed on the first connecting frame, and the respective first jacking component is connected to the first mounting stiffener.

Through the hinged connection between the first mounting seat and the first connecting frame, the smoothness of the raising process can be improved and the jamming of the raising process can be reduced.

In a preferred technical solution of the battery swap platform described above, the front-wheel roller group is a V-shaped roller group.

In a preferred technical solution of the battery swap platform described above, the front-wheel positioning device further comprises a front-wheel centering mechanism mounted in the first mounting frame.

By arranging the front-wheel centering mechanism in the first mounting frame, the integrity of the front-wheel positioning device can be improved, and the battery swap accuracy can be improved.

In a preferred technical solution of the battery swap platform described above, the rear-wheel positioning device comprises a second mounting frame and a rear-wheel roller group, the second mounting frame is embedded in the second mounting groove, the rear-wheel roller group is mounted in the second mounting frame, and each second jacking component is connected to one end of the second mounting frame.

By providing the second mounting frame, the mounting accuracy of the rear-wheel roller group can be improved, the mounting error can be reduced, and the stability of the raising process can also be improved.

In a preferred technical solution of the battery swap platform described above, the battery swap platform further comprises second connecting portions, via which the second jacking components are connected to the second mounting frame.

By providing the second connecting portions, the difficulty of designing and manufacturing the rear-wheel positioning device can be reduced, the connection accuracy can be ensured, and the manufacturing cost can be saved.

In a preferred technical solution of the battery swap platform described above, the second connecting portions each comprise a second mounting seat and a second connecting frame, the second mounting seat is fixedly connected to an end portion of the second mounting frame, the second connecting member is located on an upper side of the second mounting seat and is hingedly connected to the second mounting seat, an outwardly extending second mounting stiffener is formed on the second connecting frame, and the respective second jacking component is connected to the second mounting stiffener.

Through the hinged connection between the second mounting seat and the second connecting frame, the smoothness of the raising process can be improved and the jamming of the raising process can be reduced.

In a preferred technical solution of the battery swap platform described above, the rear-wheel roller group is an I-shaped roller group.

In a preferred technical solution of the battery swap platform described above, the rear-wheel positioning device further comprises a rear-wheel centering mechanism mounted in the second mounting frame.

By arranging the rear-wheel centering mechanism in the second mounting frame, the integrity of the rear-wheel positioning device can be improved, and the battery swap accuracy can be improved.

In a preferred technical solution of the battery swap platform described above, the bottom of each first jacking device is fixedly connected to the first mounting groove; and/or
the bottom of each second jacking device is fixedly connected to the second mounting groove.

By having the bottom of each first jacking device fixedly connected to the first mounting groove, the height space occupied by the first jacking device can be further reduced, and the flatness of the battery swap platform can be ensured. By having the bottom of each second jacking device fixedly connected to the second mounting groove, the height space occupied by the second jacking device can be further reduced, and the flatness of the battery swap platform can be ensured.

In a preferred technical solution of the battery swap platform described above, the first jacking components and the second jacking components are multi-stage jacking components.

By configuring the first jacking components and the second jacking components as multi-stage jacking components, the height space occupied by the first jacking components and the second jacking components can be reduced to the greatest extent, which is conducive to providing a user with the ultimate battery swap experience.

In a preferred technical solution of the battery swap platform described above, the first jacking devices and/or the second jacking devices are multi-stage hydraulic cylinders, multi-stage pneumatic cylinders or multi-stage electric cylinders; and/or
the first jacking components and/or the second jacking components have three or four stages.

In a preferred technical solution of the battery swap platform described above, the height of the platform body is less than or equal to 200 mm.

In a preferred technical solution of the battery swap platform described above, a ramp is formed at one end of the platform body in a length direction.

By providing a ramp at one end of the platform body, the vehicle can be guided into the battery swap platform, further improving the convenience of the vehicle entering the platform.

In a preferred technical solution of the battery swap platform described above, the battery swap platform further comprises a follow-up platform, wherein the follow-up platform is arranged at the platform body and located on one side of the platform body, and two ends of the follow-up platform are connected to the front-wheel positioning device and the rear-wheel positioning device respectively.

By providing the follow-up platform, after the vehicle is raised, the follow-up platform can be used as a pedal for getting on and off the vehicle, making it convenient for people in the vehicle to get on and off the vehicle, thereby avoid missing his/her step when getting off the vehicle.

In a preferred technical solution of the battery swap platform described above, the two ends of the follow-up platform are hingedly connected to the front-wheel positioning device and the rear-wheel positioning device respectively.

By having the two ends of the follow-up platform hingedly connected to the front-wheel positioning device and the rear-wheel positioning device, the smoothness of the lifting process of the follow-up platform can be improved, and the jamming can be reduced.

In a preferred technical solution of the battery swap platform described above, the follow-up platform comprises a generally elongated first support frame and a first strip-shaped pedal fixedly connected to an upper side of the first support frame, and two ends of the first support frame are connected to the front-wheel positioning device and the rear-wheel positioning device respectively.

In a second aspect of the disclosure, further provided is a battery charging and swapping station, comprising a box, wherein a battery rack, a battery swap robot, and a battery swap platform according to any item of the first aspect are provided in the box.

The battery charging and swapping station of the disclosure adopts the battery swap platform described above, so that it is possible to reduce the space occupied by the jacking devices on the upper side of the battery swap platform, while reducing the height of the battery swap platform and improving the user's battery swap experience. Moreover, due to the reduction of the height of the battery swap platform and the reduction of the raising height, the overall height of the battery charging and swapping station can be further reduced, increasing the scope of application of the battery charging and swapping station, making the battery charging and swapping station suitable for height-limited scenarios such as underground garages.

In a preferred technical solution of the battery charging and swapping station described above, a battery swap room and a battery charging room are formed in the box, the battery swap platform is provided in the battery swap room, the battery rack is provided in the battery charging room, a partition is provided between the battery swap room and the battery charging room, a flip platform is provided on the partition, and the flip platform is pivotably connected to the partition.

By providing the flip platform on the partition, it is convenient for the people in the vehicle to use the flip platform to get off the vehicle after the vehicle is raised.

In a preferred technical solution of the battery charging and swapping station described above, a flip driving device is provided on the partition, the flip driving device is connected to the flip platform, and the flip driving device is configured to drive the flip platform to pivot from a vertical state to a horizontal state.

By providing the flip driving device, the automatic flipping of the flip platform can be realized and the automation degree of the battery swap process can be improved.

In a preferred technical solution of the battery charging and swapping station described above, there is a gap between the bottom of the partition and the battery swap platform, and a top side of the flip platform in the vertical state is pivotably connected to the bottom of the partition.

In a preferred technical solution of the battery charging and swapping station described above, the flip platform comprises a generally elongated second support frame and a second strip-shaped pedal fixedly connected to one side of the second support frame, and the second support frame is pivotably connected to the partition.

Solution 1. A battery swap platform, comprising:
a platform body, a first mounting groove and a second mounting groove being formed on the platform body and extending in a width direction thereof;
a front-wheel positioning device arranged at the first mounting groove;
a rear-wheel positioning device arranged at the second mounting groove;
two first jacking devices arranged on two sides of the front-wheel positioning device in the width direction, the first jacking devices having retractable first jacking components, and each first jacking component is connected to one end of the front-wheel positioning device; and
two second jacking devices arranged on two sides of the rear-wheel positioning device in the width direction, the second jacking devices having retractable second jacking components, and each second jacking component being connected to one end of the rear-wheel positioning device.

Solution 2. The battery swap platform according to solution 1, wherein the front-wheel positioning device comprises a first and a front-wheel roller group, the first mounting frame is embedded in the first mounting groove, the front-wheel roller group is mounted in the first mounting frame, and each first jacking component is connected to one end of the first mounting frame.

Solution 3. The battery swap platform according to solution 2, further comprising first connecting portions, via which the first jacking components are connected to the first mounting frame.

Solution 4. The battery swap platform according to solution 3, wherein the first connecting portions each comprise a first mounting seat and a first connecting frame, the first mounting seat is fixedly connected to an end portion of the first mounting frame, the first connecting member is located on an upper side of the first mounting seat and is hingedly connected to the first mounting seat, an outwardly extending first mounting stiffener is formed on the first connecting frame, and the respective first jacking component is connected to the first mounting stiffener.

Solution 5. The battery swap platform according to solution 2, wherein the front-wheel roller group is a V-shaped roller group.

Solution 6. The battery swap platform according to solution 2, wherein the front-wheel positioning device further comprises a front-wheel centering mechanism mounted in the first mounting frame.

Solution 7. The battery swap platform according to solution 1, wherein the rear-wheel positioning device comprises a second mounting frame and a rear-wheel roller group, the second mounting frame is embedded in the second mounting groove, the rear-wheel roller group is mounted in the second mounting frame, and each second jacking component is connected to one end of the second mounting frame.

Solution 8. The battery swap platform according to solution 7, further comprising second connecting portions, via which the second jacking components are connected to the second mounting frame.

Solution 9. The battery swap platform according to solution 8, wherein the second connecting portions each comprise a second mounting seat and a second connecting frame, the second mounting seat is fixedly connected to an end portion of the second mounting frame, the second connecting member is located on an upper side of the second mounting seat and is hingedly connected to the second mounting seat, an outwardly extending second mounting stiffener is formed on the second connecting frame, and the respective second jacking component is connected to the second mounting stiffener.

Solution 10. The battery swap platform according to solution 7, wherein the rear-wheel roller group is an I-shaped roller group.

Solution 11. The battery swap platform according to solution 7, wherein the rear-wheel positioning device further comprises a rear-wheel centering mechanism mounted in the second mounting frame.

Solution 12. The battery swap platform according to solution 1, wherein the bottom of each first jacking device is fixedly connected to the first mounting groove; and/or
the bottom of each second jacking device is fixedly connected to the second mounting groove.

Solution 13. The battery swap platform according to solution 1, wherein the first jacking components and the second jacking components are multi-stage jacking components.

Solution 14. The battery swap platform according to solution 13, wherein the first jacking devices and/or the second jacking devices are multi-stage hydraulic cylinders, multi-stage pneumatic cylinders or multi-stage electric cylinders; and/or
the first jacking components and/or the second jacking components have three or four stages.

Solution 15. The battery swap platform according to solution 1, wherein the height of the platform body is less than or equal to 200 mm.

Solution 16. The battery swap platform according to solution 1, wherein a ramp is formed at one end of the platform body in a length direction.

Solution 17. The battery swap platform according to any one of Solutions 1 to 16, further comprising a follow-up platform, wherein the follow-up platform is arranged at the platform body and located on one side of the platform body, and two ends of the follow-up platform are connected to the front-wheel positioning device and the rear-wheel positioning device respectively.

Solution 18. The battery swap platform according to solution 17, wherein the two ends of the follow-up platform are hingedly connected to the front-wheel positioning device and the rear-wheel positioning device respectively.

Solution 19. The battery swap platform according to solution 17, wherein the follow-up platform comprises a generally elongated first support frame and a first strip-shaped pedal fixedly connected to an upper side of the first support frame, and two ends of the first support frame are connected to the front-wheel positioning device and the rear-wheel positioning device respectively.

Solution 20. A battery charging and swapping station, comprising a box, wherein a battery rack, a battery swap robot, and a battery swap platform of any one of Solutions 1 to 19 are provided in the box.

Solution 21. The battery charging and swapping station according to solution 20, wherein a battery swap room and a battery charging room are formed in the box, the battery swap platform is provided in the battery swap room, the battery rack is provided in the battery charging room, a partition is provided between the battery swap room and the battery charging room, a flip platform is provided on the partition, and the flip platform is pivotably connected to the partition.

Solution 22. The battery charging and swapping station according to solution 21, wherein a flip driving device is provided on the partition, the flip driving device is connected to the flip platform, and the flip driving device is configured to drive the flip platform to pivot from a vertical state to a horizontal state.

Solution 23. The battery charging and swapping station according to solution 21, wherein there is a gap between the bottom of the partition and the battery swap platform, and a top side of the flip platform in the vertical state is pivotably connected to the bottom of the partition.

Solution 24. The battery charging and swapping station according to solution 21, wherein the flip platform comprises a generally elongated second support frame and a second strip-shaped pedal fixedly connected to one side of the second support frame, and the second support frame is pivotably connected to the partition.

### Brief Description of the Drawings

The disclosure will be described below with reference to the accompanying drawings. In the drawings:
FIG. 1 is an assembly diagram of a battery swap platform according to the disclosure;
FIG. 2 is a partially exploded view of a battery swap platform according to the disclosure;
FIG. 3 is an exploded view of a front-wheel positioning device, a rear-wheel positioning device, first jacking devices and second jacking devices according to the disclosure;
FIG. 4 is an exploded view of a follow-up platform according to the disclosure;
FIG. 5 is a partial side view of a battery swap platform according to the disclosure; and
FIG. 6 is an assembly diagram of a battery charging and swapping station according to the disclosure.

### List of reference signs

10. Battery swap platform; 11. Platform body; 111. First mounting groove; 112. Second mounting groove; 113. Ramp; 114. Track; 12. Front-wheel positioning device; 121. First mounting frame; 122. Front-wheel roller group; 123. Front-wheel centering mechanism; 13. Rear-wheel positioning device; 131. Second mounting frame; 132. Rear-wheel roller group; 133. Rear-wheel centering mechanism; 14. First jacking device; 15. Second jacking device; 16. First connecting portion; 161. First mounting seat; 162. First connecting frame; 1621. First mounting stiffener; 17. Second connecting portion; 171. Second mounting seat; 172. Second connecting frame; 1721. Second mounting stiffener; 18. Follow-up platform; 181. First support frame; 182. First strip-shaped pedal;
20. Box; 21. Battery swap room; 22. Battery charging room; 23. Partition; 24. Flip platform.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure.

It should be noted that in the description of the disclosure, the terms, such as "upper", "lower", "vertical", "horizontal", "inner" and "outer" that indicate directions or positional relationships, are based on the directions or positional relationships shown in the accompanying drawings only for convenience of description, do not indicate or imply that the apparatus or element must have a specific orientation or be constructed and operated in a specific orientation, and therefore cannot be construed as limitation to the disclosure. In addition, the terms "first" and "second" are used for descriptive purposes only, and cannot be construed as indicating or implying relative importance. In addition, the length direction of a platform body described in the following implementations of the disclosure is the length direction of a vehicle with a battery to be swapped when the vehicle is parked on a battery swap platform, and the width direction of the platform body is the width direction of a vehicle with a battery to be swapped when the vehicle is parked on the battery swap platform.

In addition, it should also be noted that in the description of the disclosure, the terms "mount", "connected to each other" and "connection" should be interpreted in a broad sense unless explicitly defined and limited otherwise. For example, a connection may be a fixed connection, a detachable connection or an integral connection; may be a mechanical connection or an electrical connection; and or may be a direct connection, an indirect connection by means of an intermediary, or internal communication between two elements. Those skilled in the art can understand specific meanings of the above terms in the disclosure according to specific situations.

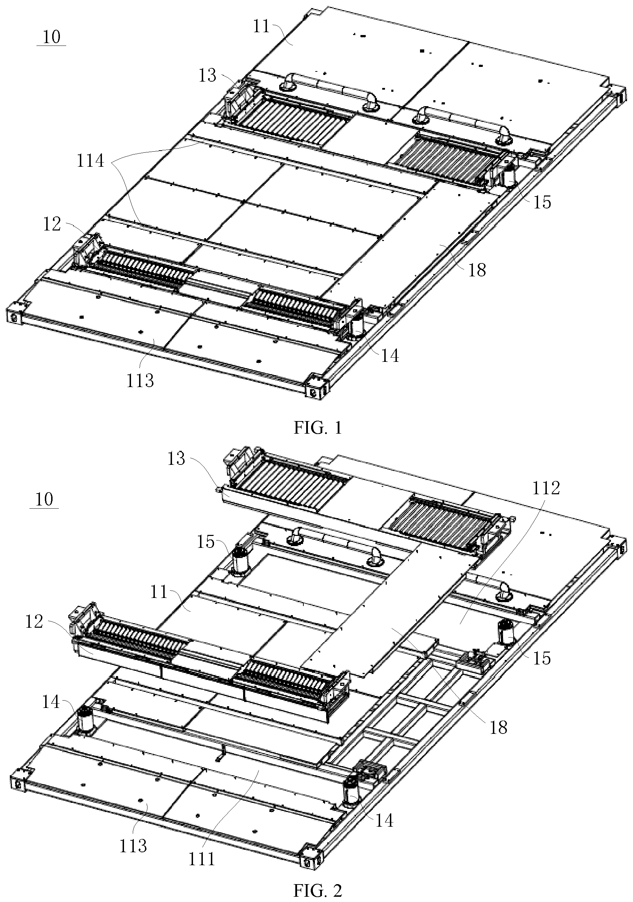

First, a battery swap platform in the disclosure is described with reference to FIGS. 1 and 2.

As shown in FIGS. 1 and 2, in order to solve the problems of a large space occupied on the upper side of the platform, limited field of view, and inconvenience in getting off the vehicle due to the use of lifting columns in the lift-type battery charging and swapping station, and the problem of not facilitating vehicle entry caused by excessive increase in the height of the platform due to the provision of the lifting devices under the wheel positioning devices, a battery swap platform 10 of the disclosure comprises: a platform body 11, a front-wheel positioning device 12, a rear-wheel positioning device 13, two first jacking devices 14, and two second jacking devices 15. A first mounting groove 111 and a second mounting groove 112 are formed on the platform body 11 and extend in a width direction thereof. The front-wheel positioning device 12 is arranged at the first mounting groove 111 for positioning front wheels of a vehicle with a battery to be swapped (hereinafter referred to as vehicle) during a battery swap process, and the rear-wheel positioning device 13 is arranged at the second mounting groove 112 for positioning rear wheels of the vehicle with a battery to be swapped during the battery swap process. The two first jacking devices 14 are arranged on two sides of the front-wheel positioning device 12 in the width direction of the platform body 11. Each first jacking device 14 has a retractable first jacking component, and each first jacking component is connected to one end of the front-wheel positioning device 12. The two second jacking devices 15 are arranged on two sides of the rear-wheel positioning device 13 in the width direction of the platform body 11. Each second jacking device 15 has a retractable second jacking component, and each second jacking component is connected to one end of the rear-wheel positioning device 13.

In a possible implementation process, before the battery swapping begins, the vehicle with a battery to be swapped enters the battery swap platform 10 and stops on the platform body 11, and the two front wheels of the vehicle with a battery to be swapped are located at the front-wheel positioning device 12, and the two rear wheels are located at the rear-wheel positioning device 13. After the battery swapping starts, the two first jacking devices 14 and the two second jacking devices 15 are operated synchronously, and the first jacking components and the second jacking components are synchronously extended to jack the front-wheel positioning device 12 and the rear-wheel positioning device 13 to a certain height so that the vehicle with a battery to be swapped is lifted. A battery swap robot then moves to the bottom of the vehicle with a battery to be swapped to remove the used battery, and then swaps a flesh battery and mounts the flesh battery to the bottom of the vehicle. After the mounting is completed, the battery swap robot moves out of the bottom of the vehicle, the two first jacking devices 14 and the two second jacking devices 15 are operated synchronously, and the first jacking components and the second jacking components are retracted synchronously, to drive the front-wheel positioning device 12 and the rear-wheel positioning device 13 to return to their original positions. At this time, the battery swapping is completed, and the vehicle can exit the battery swap platform 10 after being powered on.

In the technical solution of the disclosure, by providing the first jacking devices 14 and the second jacking devices 15, it is possible to significantly reduce the height of the battery swap platform 10 while reducing the space occupied by the jacking devices on the platform, and to significantly improve the user's battery swap experience. Specifically, the first jacking devices 14 have retractable first jacking components, and the second jacking devices 15 have retractable second jacking components, so that the first jacking components and the second jacking components can provide sufficient jacking height when extended, so as to facilitate battery swapping for a vehicle with a battery to be swapped. Moreover, the first jacking components and the second jacking components can maintain a low enough height when retracted, avoiding the occupation of too much space on the upper side of the battery swap platform 10 which otherwise results in limited field of view of the user. Furthermore, since the objects jacked by the first jacking devices 14 and the second jacking devices 15 are the front-wheel positioning device 12 and the rear-wheel positioning device 13, the raised height of the vehicle can be reduced, the battery swap operation can be completed only by lifting the vehicle to a very low height, and the restrictions on the design of a vehicle body can also be reduced. In addition, since the first jacking devices 14 and the second jacking devices 15 are arranged on two sides of the front-wheel positioning device 12 and the rear-wheel positioning device 13 in the width direction of the platform, there is no need to occupy the space under the front-wheel positioning device 12 and the rear-wheel positioning device 13, so that the height of the platform body 11 can be also greatly reduced, facilitating the more convenient and smoother entry of the vehicle into the battery swap platform 10, and improving the user's battery swap experience.

A preferred implementation of the battery swap platform 10 of the disclosure is explained below with reference to FIGS. 1 to 5.

As shown in FIGS. 1 to 5, in a preferred implementation, the battery swap platform 10 comprises a platform body 11, a front-wheel positioning device 12, a rear-wheel positioning device 13, two first jacking devices 14, two second jacking devices 15, and a follow-up platform 18.

As shown in FIGS. 1 and 2, the platform body 11 is constructed of a frame, on which a first mounting groove 111 and a second mounting groove 112 are provided. The first mounting groove 111 and the second mounting groove 112 are arranged back and forth in the length direction of the platform body 11, and the first mounting groove 111 and the second mounting groove 112 both extend in the width direction of the platform body 11. The first mounting groove 111 is used to accommodate the front-wheel positioning device 12, and the second mounting groove 112 is used to accommodate the rear-wheel positioning device 13. A ramp 113 is formed at one end of the platform body 11 that is close to the first mounting groove 111. During battery swapping, the vehicle with a battery to be swapped is reversed into the battery swap platform 10 under the guidance of the ramp 113. After driving in place, the front wheels of the vehicle are located at the front-wheel positioning device 12, and the rear wheels are located at the rear-wheel positioning device 13. A track 114 for the battery swap robot to enter and exit is further formed on the upper side of the platform body 11. The track 114 extends in the width direction of the platform body 11. After the vehicle is raised, the battery swap robot moves to below the vehicle by means of the track 114, to remove the used battery and mount a flesh battery.

By providing a ramp 113 at one end of the platform body 11, the vehicle can be guided into the battery swap platform 10, further improving the convenience of the vehicle entering the platform.

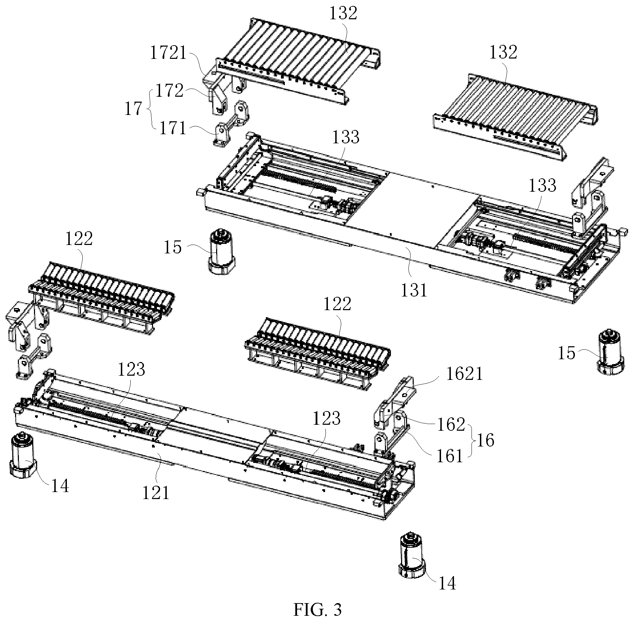

Referring to FIGS. 2 and 3, the front-wheel positioning device 12 comprises a first mounting frame 121, a front-wheel roller group 122 and a front-wheel centering mechanism 123. The first mounting frame 121 is embedded in the first mounting groove 111, and has an open upper side and a substantially C-shaped cross-section. The front-wheel roller group 122 and the front-wheel centering mechanism 123 are both mounted in the first mounting frame 121. The front-wheel roller group 122 is a V-shaped roller group. Two V-shaped roller groups are provided, and they are fixedly connected to the inner sides of two ends of the first mounting frame 121. The front-wheel centering mechanism 123 is fixedly mounted in the first mounting frame 121 and is mostly located below the V-shaped roller group. In the disclosure, the front-wheel centering mechanism 123 takes the form of an external push rod mechanism. Two external push rod mechanisms are provided, and they are symmetrically arranged in the first mounting frame 121. After the arrangement is completed, push rods extend to above the V-shaped roller groups. During operation, an electric motor drives the external push rods to move from two ends to the middle by means of a transmission assembly. During the movement, the external push rods abut against the outer sides of the front wheels of the vehicle with a battery to be swapped and pushes the vehicle to move centrally.

The rear-wheel positioning device 13 comprises a second mounting frame 131, a rear-wheel roller group 132 and a rear-wheel centering mechanism 133. The second mounting frame 131 is embedded in the second mounting groove 112, and has an open upper side and a substantially C-shaped cross-section. The rear-wheel roller group 132 and the rear-wheel centering mechanism 133 are both mounted in the second mounting frame 131. The rear-wheel roller group 132 is an I-shaped roller group. Two I-shaped roller groups are provided, and they are fixedly connected to the inner sides of two ends of the second mounting frame 131. The rear-wheel centering mechanism 133 is fixedly mounted in the second mounting frame 131 and is mostly located below the I-shaped roller group. In the disclosure, the rear-wheel centering mechanism 133 takes the form of an external push rod mechanism. Two external push rod mechanisms are provided, and they are symmetrically arranged in the second mounting frame 131. After the arrangement is completed, push rods extend to above the I-shaped roller groups. During operation, an electric motor drives the external push rods to move from two ends to the middle by means of a transmission assembly. During the movement, the external push rods abut against the outer sides of the rear wheels of the vehicle with a battery to be swapped and pushes the vehicle to move centrally. It should be noted that the specific structural forms of the V-shaped roller group, the I-shaped roller group, the front-wheel centering mechanism 123 and the rear-wheel centering mechanism 133 are common structures in the art and will not be described in detail here.

By providing the first mounting frame 121, the mounting accuracy of the front-wheel roller group 122 can be improved, the mounting error can be reduced, and the stability of the raising process can also be improved. By arranging the front-wheel centering mechanism 123 in the first mounting frame 121, the integrity of the front-wheel positioning device 12 can be improved, and the battery swap accuracy can be improved. By providing the second mounting frame 131, the mounting accuracy of the rear-wheel roller group 132 can be improved, the mounting error can be reduced, and the stability of the raising process can also be improved. By arranging the rear-wheel centering mechanism 133 in the second mounting frame 131, the integrity of the rear-wheel positioning device 13 can be improved, and the battery swap accuracy can be improved.

Still referring to FIGS. 2 and 3, the bottom of each first jacking device 14 is fixedly connected to an end portion of the first mounting groove 111, and the first jacking component of the first jacking device 14 is connected to the first mounting frame 121 via a first connecting portion 16. Similarly, the bottom of each second jacking device 15 is fixedly connected to an end portion of the second mounting groove 112, and the second jacking component is connected to the second mounting frame 131 via a second connecting portion 17. The specific connection methods of the first jacking devices 14 and the second jacking devices 15 are not limited in the disclosure, as long as the two can be effectively fixed. For example, screwing, welding, riveting, etc. may be used to fix the first jacking devices 14 and the second jacking devices 15.

Preferably, in the disclosure, the first jacking devices 14 and the second jacking devices 15 both use multi-stage hydraulic cylinders, and the first jacking components and the second jacking components both have three stages. The multi-stage hydraulic cylinder comprises a cylinder body and a multi-stage socketed piston rod (i.e., jacking component) arranged in the cylinder body. By controlling the direction of hydraulic oil in and out of the cylinder body, the multi-stage piston rod can be extended or retracted stage by stage. The specific structure of the multi-stage hydraulic cylinder is relatively common and will not be described in detail in the disclosure. The following section of the disclosure will focus on the structural connection method of the multi-stage hydraulic cylinder and the battery swap platform 10.

Referring to FIG. 3, the first connecting portions 16 each comprise a first mounting seat 161 and a first connecting frame 162. The first mounting seat 161 is screwed and fixedly connected to an end portion of the first mounting frame 121, the first connecting member is located on an upper side of the first mounting seat 161 and is hingedly connected to the first mounting seat 161, an outwardly extending first mounting stiffener 1621 is formed on the first connecting frame 162, and the respective first jacking component is connected to the first mounting stiffener 1621. Similarly, the second connecting portions 17 each comprise a second mounting seat 171 and a second connecting frame 172. The second mounting seat 171 is fixedly connected to an end portion of the second mounting frame 131, the second connecting member is located on an upper side of the second mounting seat 171 and is hingedly connected to the second mounting seat 171, an outwardly extending second mounting stiffener 1721 is formed on the second connecting frame 172, and the respective second jacking component is connected to the second mounting stiffener 1721. The specific connection methods of the first jacking component and the first mounting stiffener 1621, and the second jacking component and the second mounting stiffener 1721 are not limited in the disclosure, which may be screwing, flanged connection, riveting, etc.

By providing the first connecting portions 16, the difficulty of designing and manufacturing the front-wheel positioning device 12 can be reduced, the connection accuracy can be ensured, and the manufacturing cost can be saved. Through the hinged connection between the first mounting seat 161 and the first connecting frame 162, the smoothness of the raising process can be improved and the jamming of the raising process can be reduced. By providing the second connecting portions 17, the difficulty of designing and manufacturing the rear-wheel positioning device 13 can be reduced, the connection accuracy can be ensured, and the manufacturing cost can be saved. Through the hinged connection between the second mounting seat 171 and the second connecting frame 172, the smoothness of the raising process can be improved and the jamming of the raising process can be reduced. By having the bottom of each first jacking device 14 fixedly connected to the first mounting groove 111, the height space occupied by the first jacking device 14 can be further reduced, and the flatness of the battery swap platform 10 can be ensured. By having the bottom of each second jacking device 15 fixedly connected to the second mounting groove 112, the height space occupied by the second jacking device 15 can be further reduced, and the flatness of the battery swap platform 10 can be ensured. By configuring the first jacking components and the second jacking components as multi-stage jacking components, the height space occupied by the first jacking components and the second jacking components can be reduced to the greatest extent, which is conducive to providing a user with the ultimate battery swap experience. By using multi-stage hydraulic cylinders for the first jacking devices 14 and the second jacking devices 15, the structural complexity of the devices can be reduced while ensuring the jacking stability.

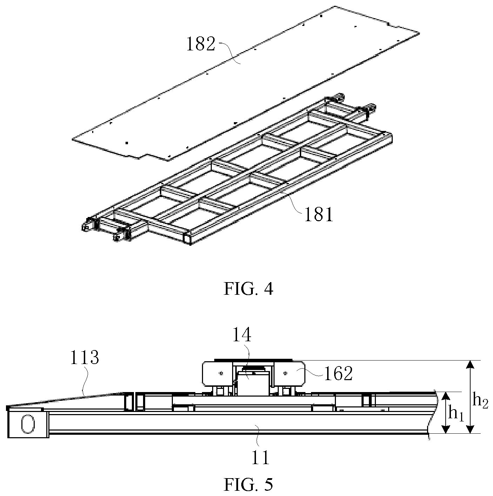

Referring to FIGS 2 and 4, the follow-up platform 18 is arranged at the platform body 11 and located on one side of the platform body 11, and two ends of the follow-up platform 18 are connected to the front-wheel positioning device 12 and the rear-wheel positioning device 13 respectively. Specifically, the follow-up platform 18 is located between the front-wheel positioning device 12 and the rear-wheel positioning device 13, and is located on the driver's side of the vehicle with a battery to be swapped after it is parked on the platform body 11. The follow-up platform 18 comprises a generally elongated first support frame 181 and a first strip-shaped pedal 182 fixedly connected to an upper side of the first support frame 181, and two ends of the first support frame 181 are connected to the front-wheel positioning device 12 and the rear-wheel positioning device 13 respectively. In this way, during the raising process of the vehicle, the follow-up platform 18 rises together with the front-wheel positioning device 12 and the rear-wheel positioning device 13. People in the vehicle on the driver's side can open a vehicle door and get in and out of the vehicle with the help of the follow-up platform 18.

By providing the follow-up platform 18, after the vehicle is raised, the follow-up platform 18 can be used as a pedal for getting on and off the vehicle, making it convenient for people in the vehicle to get on and off the vehicle, thereby avoid missing his/her step when getting off the vehicle. By having the two ends of the follow-up platform 18 hingedly connected to the front-wheel positioning device 12 and the rear-wheel positioning device 13, the smoothness of the lifting process of the follow-up platform 18 can be improved, and the jamming can be reduced.

Referring to FIG. 5, after the above arrangement is completed, the height of the platform body 11 (i.e., hi in FIG. 5) is less than or equal to 200 mm, and the height of the highest point of the battery swap platform 10 (i.e., h₂ in FIG. 5) is less than or equal to 350 mm. In the disclosure, the height of the platform body 11 is the height that the vehicle needs to rise after reversing into the platform, and the highest point of the battery swap platform 10 is the height at which the top surface of the first connecting frame 162 or the top surface of the second connecting frame 172 is located. It can be seen that the height of the platform body 11 and the overall height of the battery swap platform 10 are each in an extremely low value range, which can undoubtedly provide the user with the ultimate battery swap experience.

It should be noted that the above preferred implementations are merely used for illustrating the principles of the disclosure, and are not intended to limit the scope of protection of the disclosure. Those skilled in the art can adjust the above configuration without departing from the principles of the disclosure, such that the disclosure can be applicable to more specific application scenarios.

For example, although the above implementations are explained with the first jacking devices 14 and the second jacking devices 15 being three-stage hydraulic cylinders as an example, the arrangement of the two is not restrictive, which may be adjusted by those skilled in the art based on specific application scenarios. For example, at least one of the two may be replaced by a pneumatic cylinder or an electric cylinder, and the first jacking components and/or the second jacking components may have one, two, four or more stages. Of course, fewer stages means that the device occupies a larger height, and more stages means a more complex structure. The disclosure uses a three-stage hydraulic cylinder, which can take into account both space occupation and structural complexity.

In addition, those skilled in the art can also understand that in addition to the multi-stage hydraulic cylinder, other retractable devices can also be applied in the disclosure, even if they do not have the effect as prominent as the multi-stage hydraulic cylinder. For example, single-stage/multi-stage retractable connecting rods, single-stage/multi-stage retractable frames, single-stage/multi-stage scissor forks, etc. may all replace the multi-stage hydraulic cylinders.

For another example, although the above implementations are explained on the basis that the first jacking components are connected to the first mounting frame 121 via the first connecting portions 16, this connection method is not unique, which may be adjusted by those skilled in the art, as long as each first jacking component is ensured to be connected to one end of the first mounting frame 121. For example, the first jacking components may be directly connected to the first mounting frame 121. In this case, corresponding connecting structures need to be provided at the two ends of the first mounting frame 121. For another example, the first mounting seat 161 and the first connecting frame 162 of the first connecting portion 16 may be fixedly connected to each other or integrally formed with each other, and then connected to the respective first jacking component and the first mounting frame 121 respectively. Similarly, the connection method between the second jacking components and the second mounting frame 131 may also be adjusted as above.

For another example, although the above implementations are explained on the basis that the front-wheel positioning device 12 comprises the first mounting frame 121, the front-wheel roller group 122 and the front-wheel centering mechanism 123, the specific structure of the front-wheel positioning device 12 is not invariable, which may be adjusted by those skilled in the art based on specific application scenarios. For example, the first mounting frame 121 of the front-wheel positioning device 12 may be adjusted to other shapes. For another example, the front-wheel positioning device 12 may only comprise one of the front-wheel roller group 122 and the front-wheel centering mechanism 123, and the other one is arranged at another position of the platform body 11. For another example, the front-wheel roller group 122 may be interchanged with the I-shaped roller group in addition to the V-shaped roller group. Similarly, those skilled in the art can also make the above adjustments to the specific composition of the rear-wheel positioning device 13.

For another example, although the first jacking devices 14 and the second jacking devices 15 are explained on the basis that the bottoms thereof being fixedly connected in the first mounting groove 111 and the second mounting groove 112, the specific mounting positions of the two are not unique, and those skilled in the art can also arrange the two on the outer side of the platform body 11 or on the platform body 11 except the mounting grooves, etc. according to requirements.

For another example, the ramp 113 on the platform body 11 is not necessary. In other implementations, the provision of the ramp 113 may be omitted, or additional wedge-shaped guide bars may be provided in front of the platform body 11.

For another example, although the above arrangement is explained on the basis that a follow-up platform 18 is arranged on the battery swap platform 10, the provision of the follow-up platform 18 is not necessary. In other implementations, those skilled in the art can selectively omit the provision of the follow-up platform 18. Alternatively, the connection of the two ends of the follow-up platform 18 with the front-wheel positioning device 12 and the rear-wheel positioning device 13 may be changed to fixed connection, etc.

For another example, the specific composition of the follow-up platform 18 is not unique. Those skilled in the art can adjust the structure of the follow-up platform 18 as long as it can support people, and this adjustment does not deviate from the principle of the disclosure.

Of course, the above alternative implementations, or the alternative implementations and the preferable implementations may be cross-used cooperatively, so as to obtain new implementations that are suitable for more specific application scenarios by combining the above implementations.

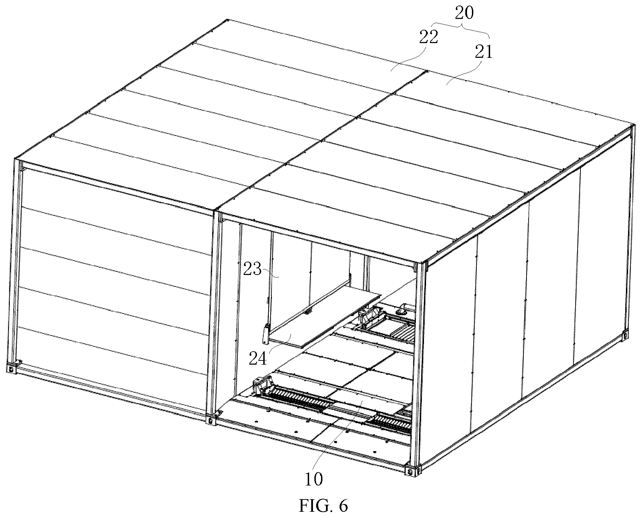

A battery charging and swapping station of the disclosure is explained below with reference to FIG. 6.

As shown in FIG. 6, the battery charging and swapping station of the disclosure comprises a box 20. A battery rack, a battery swap robot, and the battery swap platform 10 according to the above implementations are provided in the box 20. The battery rack and the battery swap robot are not shown in FIG. 6. The specific structures of the two are relatively common in the art, and will not be described in detail in the disclosure.

In a preferred implementation, a battery swap room 21 and a battery charging room 22 are formed in the box 20, the battery swap platform 21 is provided in the battery swap room 10, the battery rack is provided in the battery charging room 22, a partition 23 is provided between the battery swap room 21 and the battery charging room 22, a flip platform 24 is provided on the partition 23, and the flip platform 24 is pivotably connected to the partition 23. Specifically, the flip platform 24 comprises a generally elongated second support frame and a second strip-shaped pedal fixedly connected to one side of the second support frame, there is a gap between the bottom of the partition 23 and the battery swap platform 10, and the top side of the second support frame is pivotably connected to the bottom of the partition 23 when the flip platform 24 is in a vertical state. A flip driving device is provided on the partition 23, the flip driving device is connected to the flip platform 24, and the flip driving device is configured to drive the flip platform 24 to pivot from the vertical state to a horizontal state. For example, the flip driving device comprises an electric motor and a transmission rod group. The electric motor drives the transmission rod group to lift and lower. The transmission rod group drives the flip platform 24 to pivot around the pivot axis and switch between the horizontal state and the vertical state. When switching to the horizontal state, the gap between the bottom of the partition 23 and the battery swap platform 10 allows the passage of the battery swap robot. The specific composition and structure of the flip platform 24 can be referred to the follow-up platform 18 and will not be described again in the disclosure.

The battery charging and swapping station of the disclosure adopts the battery swap platform 10 described above, so that it is possible to reduce the space occupied by the jacking devices on the upper side of the battery swap platform 10, while reducing the height of the battery swap platform 10 and improving the user's battery swap experience. Moreover, due to the reduction of the height of the battery swap platform 10 and the reduction of the raising height, the overall height of the battery charging and swapping station can be further reduced, increasing the scope of application of the battery charging and swapping station, making the battery charging and swapping station suitable for height-limited scenarios such as underground garages. By providing the flip platform 24 on the partition 23, it is convenient for the people in the vehicle to use the flip platform 24 to get off the vehicle after the vehicle is raised. By providing the flip driving device, the automatic flipping of the flip platform 24 can be realized and the automation degree of the battery swap process can be improved.

Of course, the specific implementation of the battery charging and swapping station is not unique, which may be adjusted by those skilled in the art according to requirements. For example, no partition 23 may be provided between the battery swap room 21 and the battery charging room 22, and accordingly the provision of the flip platform 24 is omitted. For another example, the flip platform 24 may be configured such that in the vertical state, the bottom side of the second support frame is hingedly connected to the bottom side of the partition 23, that is to say, it can be pivoted and deployed from top to bottom when needed. For another example, no flip driving device may be provided, or the flip driving device may be configured in other ways, as long as it can drive the flip platform 24 to switch between the vertical state and the horizontal state.

The working principle of the battery charging and swapping station of the disclosure will be briefly explained below.

In one implementation, the vehicle with a battery to be swapped is reversed into the platform body 11 until the two rear wheels are supported on the I-shaped roller groups, and the two front wheels are sunk into the V-shaped roller groups, thereby realizing the positioning of the vehicle in the length direction. Next, the front-wheel centering mechanism 123 and the rear-wheel centering mechanism 133 are operated to push the front wheels and the rear wheels of the vehicle from the outside of the vehicle until all the external push rods come into contact with the wheels and the thrust reaches a certain threshold, thereby realizing the positioning of the vehicle in the width direction. As a result, the positioning of the vehicle with a battery to be swapped on the parking platform is completed. Next, the four three-stage hydraulic cylinders are extended simultaneously to jack the front-wheel positioning device 12 and the rear-wheel positioning device 13 to raise the vehicle. At this time, the follow-up platform 18 rises synchronously with the front-wheel positioning device 12 and the rear-wheel positioning device 13. While the vehicle is being raised, the flip driving device is activated to drive the flip platform 24 to pivot from the vertical state to the horizontal state. After the vehicle is raised to a preset height, the battery swap robot moves to below the vehicle by means of the track 114 on the platform body 11, disassembles the used battery, transports the used battery back to the battery rack for charging, and then receives a flesh battery from the battery rack. Immediately afterwards, the battery swap robot carries the flesh battery back to below the vehicle, mounts the flesh battery to a chassis of the vehicle, and moves out of the chassis of the vehicle. Finally, the four three-stage hydraulic cylinders are retracted synchronously, to drive the front-wheel positioning device 12 and the rear-wheel positioning device 13 to descend synchronously until they return to their original positions. At this time, the battery swapping is completed, and the vehicle can exit the battery swap platform 10 after being powered on. If an abnormality occurs during the battery swap process, the people in the vehicle on the driver's side can get out of the vehicle by means of the follow-up platform 18, and the people in the vehicle on the passenger side can get off the vehicle by means of the flip platform 24.

Those skilled in the art should understand that, although some of the embodiments herein include some but not other features included in other embodiments, the combination of the features of different embodiments means being within the scope of the disclosure and forms different embodiments. For example, in the claims of the disclosure, any one of the claimed embodiments can be used in any combination.

Heretofore, the technical solutions of the disclosure have been described in combination with the preferred implementations shown in accompanying drawings. However, those skilled in the art can readily understand that the scope of protection of the disclosure is apparently not limited to these particular implementations. Those skilled in the art can make equivalent changes or substitutions to the related technical features without departing from the principle of the disclosure, and all the technical solutions with such changes or substitutions shall fall within the scope of protection of the disclosure.

## Claims

1. A battery swap platform, comprising:
a platform body, a first mounting groove and a second mounting groove being formed on the platform body and extending in a width direction thereof;
a front-wheel positioning device arranged at the first mounting groove;
a rear-wheel positioning device arranged at the second mounting groove;
two first jacking devices arranged on two sides of the front-wheel positioning device in the width direction, the first jacking devices having retractable first jacking components, and each first jacking component is connected to one end of the front-wheel positioning device; and
two second jacking devices arranged on two sides of the rear-wheel positioning device in the width direction, the second jacking devices having retractable second jacking components, and each second jacking component being connected to one end of the rear-wheel positioning device.

2. The battery swap platform according to claim 1, wherein the front-wheel positioning device comprises a first and a front-wheel roller group, the first mounting frame is embedded in the first mounting groove, the front-wheel roller group is mounted in the first mounting frame, and each first jacking component is connected to one end of the first mounting frame.

3. The battery swap platform according to claim 2, further comprising first connecting portions, via which the first jacking components are connected to the first mounting frame.

4. The battery swap platform according to claim 3, wherein the first connecting portions each comprise a first mounting seat and a first connecting frame, the first mounting seat is fixedly connected to an end portion of the first mounting frame, the first connecting member is located on an upper side of the first mounting seat and is hingedly connected to the first mounting seat, an outwardly extending first mounting stiffener is formed on the first connecting frame, and the respective first jacking component is connected to the first mounting stiffener.

5. The battery swap platform according to any one of claims 2 to 4, wherein the front-wheel roller group is a V-shaped roller group.

6. The battery swap platform according to any one of claims 2 to 5, wherein the front-wheel positioning device further comprises a front-wheel centering mechanism mounted in the first mounting frame.

7. The battery swap platform according to any one of claims 1 to 6, wherein the rear-wheel positioning device comprises a second mounting frame and a rear-wheel roller group, the second mounting frame is embedded in the second mounting groove, the rear-wheel roller group is mounted in the second mounting frame, and each second jacking component is connected to one end of the second mounting frame.

8. The battery swap platform according to claim 7, further comprising second connecting portions, via which the second jacking components are connected to the second mounting frame.

9. The battery swap platform according to claim 8, wherein the second connecting portions each comprise a second mounting seat and a second connecting frame, the second mounting seat is fixedly connected to an end portion of the second mounting frame, the second connecting member is located on an upper side of the second mounting seat and is hingedly connected to the second mounting seat, an outwardly extending second mounting stiffener is formed on the second connecting frame, and the respective second jacking component is connected to the second mounting stiffener.

10. The battery swap platform according to claim 7, 8, or 9, wherein the rear-wheel roller group is an I-shaped roller group.
